# EUROPÄISCHE PATENTSCHRIFT

(11) **EP 1 412 930 B1**
(45) Veröffentlichungstag und Bekanntmachung des Hinweises auf die Patenterteilung: **26.03.2008**
(21) Anmeldenummer: 02753013.8
(22) Anmeldetag: 11.07.2002
(51) Int. Cl.: G08G 1/16

(54) **VERFAHREN UND VORRICHTUNG ZUM SELBSTTÄTIGEN AUSLÖSEN EINER VERZÖGERUNG EINES FAHRZEUGS**
METHOD AND DEVICE FOR AUTOMATICALLY TRIGGERING DECELERATION OF A VEHICLE
PROCEDE ET DISPOSITIF DE DECLENCHEMENT AUTOMATIQUE DE LA DECELERATION D'UN VEHICULE

(30) Priorität: 11.07.2001 DE 10133027
(43) Veröffentlichungstag der Anmeldung: 28.04.2004
(73) Patentinhaber: ROBERT BOSCH GMBH, 70442 Stuttgart (DE)
(72) Erfinder: KNOPP, Michael, 71638 Ludwigsburg (DE); BRAEUCHLE, Goetz, 74934 Reichertshausen (DE); WINNER, Hermann, 76467 Bietigheim (DE); WEILKES, Michael, 74343 Sachsenheim (DE); HEINEBRODT, Martin, 70176 Stuttgart (DE); UHLER, Werner, 76646 Bruchsal (DE); THIELE, Joachim, 70732 Tamm (DE); STAEMPFLE, Martin, 89075 Ulm (DE); OECHSLE, Fred, 71642 Ludwigsburg (DE); WILHELM, Ulf, 71277 Rutesheim (DE)
(86) Internationale Anmeldenummer: PCT/DE2002/002547
(87) Internationale Veröffentlichungsnummer: WO 2003/007271

(56) Entgegenhaltungen:
- EP-A- 0 927 677
- DE-A- 3 325 714
- FR-A- 2 787 081
- US-A- 5 420 792
- US-A- 5 642 093
- US-A- 5 684 699
- US-A- 5 925 082

## Beschreibung

Vorgeschlagen wird ein Verfahren und eine Vorrichtung zum selbsttätigen Auslösen einer Verzögerung eines Fahrzeugs zur Verhinderung eines Zusammenstoßes oder zur Verminderung der Folgen eines bevorstehenden Zusammenstoßes, indem eine oder mehrere Größen, die eine Kollisiongefährdung mit einem weiteren Objekt repräsentieren, in einem vorgebbaren Auslösebereich liegen müssen und wobei der Auslösebereich in Abhängigkeit von der Fahrerreaktion veränderbar ist. Zur Bestimmung der Veränderung des Auslösebereichs werden Signale eines Lenkwinkelsensors, eines Bremspedalsensors, und/oder eines Fahrpedalsensors, ausgewertet.

### Stand der Technik

In der Vergangenheit sind vermehrt Systeme zur Abstands- und Geschwindigkeitsregelung auf den Markt gekommen, die die Funktionalität eines herkömmlichen Tempomaten dahingehend erweitern, dass bei Erkennen eines langsameren, vorherfahrenden Fahrzeugs vor dem eigenen Fahrzeug, die Geschwindigkeitsregelung umgeschaltet wird auf eine Abstandsregelung und dem vorherfahrenden Fahrzeug mit gleicher Geschwindigkeit gefolgt wird. Die grundsätzliche Funktionsweise eines derartigen Abstands- und Geschwindigkeitsregelsystems ist in dem Aufsatz "adaptive cruise control system - aspects and development trends" von Winner, Witte et al., SAE-paper 96 10 10, erschienen auf der SAE International Congress and Exposition, Detroit, 26.-29. Februar 1996, beschrieben.

In der DE 195 47 111 ist ein Verfahren und eine Vorrichtung zur Steuerung der Bremsanlage eines Fahrzeugs beschrieben, bei welchem bereits vor Beginn einer Antriebsschlupfregelung Druck in die Radbremsen bei Vorliegen vorgegebener Bedingungen eingesteuert wird, wobei keine nennenswerte Bremswirkung an den Antriebsrädern aufgebracht wird.

Aus der US 5,420,792 ist ein automatisches Bremssteuerungssystem bekannt, welches eine Warnung erzeugt, bevor automatisch eine Bremswirkung an einem Fahrzeug gemäß der Geschwindigkeiten des Fahrzeugs und des Fahrzeugs davor vollzogen wird. Das System berechnet die gewünschte Fahrzeugentfernung gemäß den Geschwindigkeiten des Fahrzeugs und des Fahrzeugs davor und stellt die Warnungsentfernung ein, die länger ist als die gewünschte Fahrzeugentfernung. Die Warnungsentfernung wird eingestellt gemäß dem Gefühl des Fahrers. Damit wird das Erzeugen einer nicht wünschenswerten Warnung verhindert.

### Kern und Vorteile der Erfindung

Der Kern der vorliegenden Erfindung ist es, ein Verfahren und eine zugehörige Vorrichtung zum selbsttätigen Auslösen einer Verzögerung eines Fahrzeugs zur Verhinderung eines Zusammenstoßes oder zur Verminderung der Folgen eines bevorstehenden Zusammenstoßes gemäß den Merkmalen der unabhängigen Ansprüche 1 und 13 bereitzustellen.

Vorteilhafte Weiterbildungen und Ausgestaltungen ergeben sich aus den Unteransprüchen.

Das selbsttätige Auslösen einer Verzögerung eines Fahrzeugs zur Verhinderung eines Zusammenstoßes oder zur Verminderung der Folgen eines bevorstehenden Zusammenstoßes meint in diesem Zusammenhang insbesondere das automatische Auslösen einer Not- bzw. Vollbremsung, deren Bremsverzögerung in etwa der maximal möglichen Fahrzeugverzögerung entspricht. Eine selbsttätig ausgelöste Not- bzw. Vollbremsung ist für die Insassen des Fahrzeugs sowie für die weiteren Verkehrsteilnehmer von besonderer Brisanz, da diese Vollbremsung in den meisten Fällen ein Gefahrenpotential birgt. Aus diesem Grund sind die Anforderungen an den Auslösealgorithmus einer derartigen Verzögerung besonders hoch, da dieser die Zuverlässigkeit dieser Sicherheitsfunktion bestimmt. Um den Auslösebereich so zu verändern, dass er der jeweils vorherrschenden Fahrzeug- und Umfeldsituation am besten entspricht, wird der Bereich in Abhängigkeit der beschriebenen Eingangsgrößen variiert.

Wird die Kollisionsgefährdung nur anhand eines Wertes beurteilt, dann kann der Auslösebereich durch Überschreitung eines Schwellenwertes festgelegt werden.

Vorteilhafterweise wird der Schwellenwert zur selbsttätigen Auslösung einer Fahrzeugverzögerung erhöht, wenn die Lenkwinkelgeschwindigkeit einen ersten Lenkwinkelgeschwindigkeitsschwellenwert überschreitet, wodurch die Auslösung erst bei einem höheren Kollisionsrisiko aktiviert wird. Durch die Annahme, dass bei Überschreiten des ersten Lenkwinkelgeschwindigkeitsschwellenwertes der Fahrer bereits durch ein Ausweichmanöver auf die gefahrenträchtige Situation reagiert, kann die Auslöseschwelle erhöht werden, da der Fahrer bereits selbst reagiert hat.

Vorteilhafterweise wird die selbsttätige Auslösung einer Fahrzeugverzögerung unterbunden, wenn die Lenkwinkelgeschwindigkeit einen zweiten Lenkwinkelgeschwindigkeitsschwellenwert überschreitet, der größer ist als der erste Lenkwinkelgeschwindigkeitsschwellenwert. Sollte der Fahrer durch ein manuell durchgeführtes Ausweichmanöver die Fahrzeuglenkung derart schnell einschlagen, dass der zweite Lenkwinkelgeschwindigkeitsschwellenwert überschritten wird, so ist davon auszugehen, dass bei einer zusätzlich durchgeführten Verzögerung das Fahrzeug ins Schleudern gerät.

Weiterhin ist es vorteilhaft, dass die selbsttätig ausgelöste Verzögerung beendet wird, wenn die durch die Fahrerreaktion bedingte Lenkwinkelgeschwindigkeit während einer bereits selbsttätig ausgelösten Fahrzeugverzögerung einen dritten Lenkwinkelgeschwindigkeitsschwellenwert überschreitet. Sollte die automatische Fahrzeugverzögerung das Fahrzeug bereits verzögern, jedoch der Fahrer möchte durch eine Lenkbewegung ein Ausweichmanöver durchführen, so wird der Fahrerreaktion eine Priorität gegenüber der automatischen Aktion eingeräumt, so dass die Verzögerung beendet wird und der Fahrer sein Ausweichmanöver durchführen kann.

Vorteilhafterweise wird eine selbsttätige Auslösung einer Verzögerung verhindert, wenn der Bremsdruck infolge einer Betätigung des Bremspedals durch den Fahrer in etwa dem maximal möglichen Bremsdruck entspricht. Sollte der Fahrer während einer automatischen Verzögerung selbst eine Verzögerung durchführen, die in etwa dem gleichen Bremsdruck entspricht wie eine automatisch ausgelöste Verzögerung, so wird der Fahrerreaktion Dominanz gegenüber der automatischen Aktion eingeräumt, da man davon ausgehen kann, dass der Fahrer aufmerksam ist und die Situation überblickt.

Weiterhin ist es vorteilhaft, dass die selbsttätig ausgelöste Verzögerung abgebrochen wird, wenn der Fahrer das Bremspedal betätigt und während der Bremspedalbetätigung des Fahrers eine selbsttätige Fahrzeugverzögerung ausgelöst wird und der Fahrer im weiteren Verlauf das Bremspedal loslässt. Im Falle, dass der Fahrer eine Teilverzögerung durchführt und im Anschluss daran ein Ausweichmanöver durchführen möchte, soll sichergestellt werden, dass die automatische Fahrzeugverzögerung das Lenkmanöver nicht verhindert. Eine Ausführung eines Lenkmanövers und einer gleichzeitigen automatischen Verzögerung könnten das Fahrzeug ins Schleudern geraten lassen.

Besonders vorteilhaft ist es weiterhin, dass die Auslöseschwelle zur selbsttätigen Auslösung einer Fahrzeugverzögerung erhöht wird, wenn der Fahrer das Fahrpedal derart schnell betätigt, dass ein erster Fahrpedalgeschwindigkeitsschwellenwert überschritten wird. Durch Überschreiten dieses ersten vorgegebenen Fahrpedalgeschwindigkeitsschwellenwertes kann man darauf schließen, dass sich der Fahrer durch eine Beschleunigung dieser gefahrenträchtigen Situation entziehen möchte, wodurch eine gleichzeitige automatische Verzögerung erst bei einem höheren Gefahrenpotential einsetzten soll, da man davon ausgehen kann, dass der Fahrer aufmerksam ist und die Situation überblickt.

Weiterhin ist es vorteilhaft, dass die selbsttätige Auslösung einer Fahrzeugverzögerung verhindert wird, wenn der Fahrer das Fahrpedal derart schnell betätigt, dass ein zweiter Fahrpedalgeschwindigkeitsschwellenwert überschritten wird, der im Allgemeinen größer ist also der erste. In dem Fall, dass der Fahrer eine derart starke Beschleunigung anfordert, um sich der Gefahrensituation zu entziehen, soll folglich eine Verzögerung ganz ausgeschlossen werden.

Vorteilhafterweise wird eine bereits selbsttätig ausgelöste Verzögerung wieder abgebrochen, wenn während einer selbsttätig ausgelösten Fahrzeugverzögerung der Fahrer das Fahrpedal derart schnell betätigt, dass ein dritter Fahrpedalgeschwindigkeitsschwellenwert überschritten wird. Entscheidet der Fahrer während einer automatischen Verzögerung, dass es günstiger ist in diesem Fall eine Fahrzeugbeschleunigung durchzuführen, so wird dieser Fahrerentscheidung Priorität eingeräumt und folglich die Verzögerung abgebrochen.

Vorteilhafterweise wird der Schwellenwert zur selbsttätigen Auslösung einer Fahrzeugverzögerung verringert, wenn der Fahrer das Fahrpedal derart schnell loslässt, dass ein vierter Fahrpedalgeschwindigkeitsschwellenwert betragsmäßig überschritten wird. Erkennt der Fahrer das Gefahrenpotential einer Situation und geht infolge dessen schnell vom Gas, bremst jedoch nicht, so wird eine automatische Verzögerung bereits früher eingeleitet, da man davon ausgehen kann, dass der Fahrer einen Verzögerungswunsch hat, diesen jedoch nicht derart schnell umsetzt.

Weiterhin ist es vorteilhaft, dass der Schwellwert zur selbsttätigen Auslösung einer Fahrzeugverzögerung verringert wird, wenn der Fahrer das Bremspedal derart betätigt, dass eine Fahrzeugverzögerung eintritt, die nicht der maximal möglichen Verzögerung entspricht und eine Lenkwinkelveränderung erfolgt, deren Lenkwinkelgeschwindigkeit einen vorgegebenen Lenkwinkelgeschwindigkeitsschwellenwert nicht überschreitet. In diesem Fall kann man davon ausgehen, dass es sich hierbei um eine unvollständige Reaktion des Fahrers handelt, bei der eine automatische Vollbremsung einen Sicherheitsgewinn bringt.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor ablauffähig und zur Ausführung des erfindungsgemäßen Verfahrens geeignet ist. In diesem Fall wird also die Erfindung durch einen auf dem Steuerelement abgespeichertes Programm realisiert, so dass dieses mit dem Programm versehen Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammensetzung in den Patentansprüchen oder deren Rückbeziehung sowie unabhängig von ihrer Formulierung bzw. Darstellung in der Beschreibung bzw. in der Zeichnung.

### Zeichnungen

Nachfolgend werden Ausführungsbeispiele der Erfindung anhand von Zeichnungen erläutert. Es zeigen
- Figur 1: ein Ablaufdiagramm zur Durchführung des erfindungsgemäßen Verfahrens und
- Figur 2: ein Blockschaltbild einer Vorrichtung zur Durchführung des erfindungsgemäßen Verfahrens.

### Beschreibung von Ausführungsbeispielen

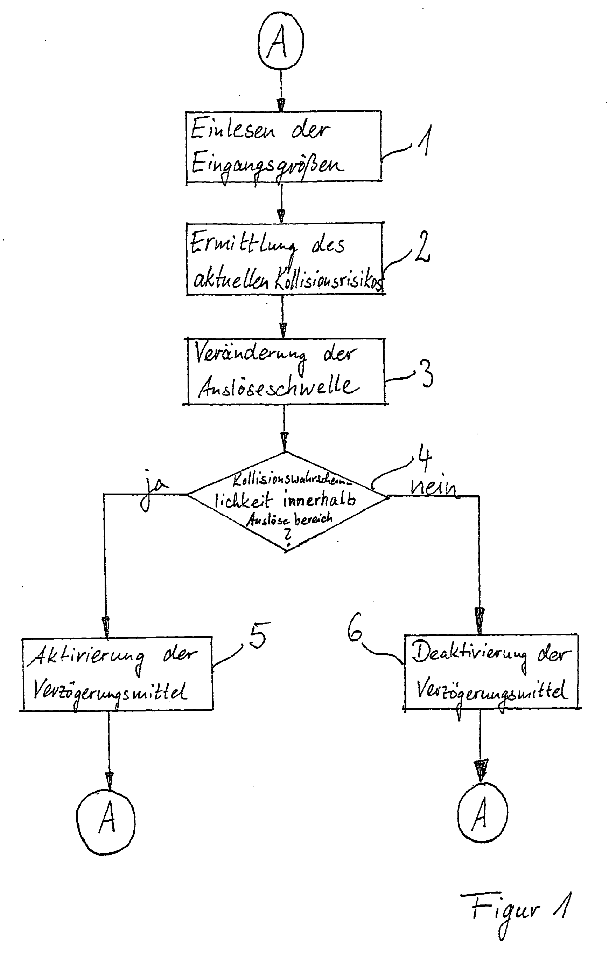

Figur 1 zeigt ein Ablaufdiagramm zur Durchführung des erfindungsgemäßen Verfahrens. Zu Beginn des dargestellten Zyklusses, der fortwährend durchlaufen wird, werden, wie in Block 1 dargestellt, die Eingangsgrößen eingelesen. Als Eingangsgrößen kommen Signale in Betracht, die von einem Lenkwinkelsensor, einem Bremspedalsensor, einem Fahrpedalsensor, einer Einrichtung zur Ermittlung der Fahrzeuggeschwindigkeit, einer Einrichtung zur Ermittlung der Fahrbahnsteigung bzw. des Fahrbahngefälles, einer Einrichtung zur Ermittlung der Fahrzeuggierrate oder einer Einrichtung zur Ermittlung des Fahrzeugschwimmwinkels oder einer Einrichtung zur Erfassung von stehenden und bewegten Objekten im Umfeld des Fahrzeugs stammen. Auf Grundlage dieser, in Schritt 1 eingelesenen Daten wird im darauffolgenden Schritt 2 das aktuelle Kollisionsrisiko ermittelt. Dieses aktuelle Kollisionsrisiko repräsentiert die Wahrscheinlichkeit, dass das eigene Fahrzeug im weiteren Verlauf mit einem stehenden oder bewegten Objekt kollidiert, das sich in der Bewegungsrichtung des eigenen Fahrzeugs befindet. Dieses in Schritt 2 ermittelte aktuelle Kollisionsrisiko wird als eine Größe gespeichert, die diese Wahrscheinlichkeit repräsentiert und aus mehreren Werten bestehen kann. In Schritt 3 wird ein Auslösebereich, der im Normalfall einen fest eingespeicherten, vorgegebenen Bereich besitzt, in Abhängigkeit der ermittelten Eingangsgrößen verändert. Diese Veränderung des Auslösebereichs erfolgt derart, wie es in den Ansprüchen und Unteransprüchen beschrieben wurde. Es wird dementsprechend der Auslösebereich vergrößert oder verkleinert, so dass eine Auslösung bei einem, in Bezug auf den unveränderten Auslösebereich, erhöhtem oder verringertem Kollisionsrisiko erfolgt. Dementsprechend ist es möglich, dass der Auslösebereich verringert, vergrößert oder beibehalten wird. In den Fällen, in denen eine Auslösung vermieden werden soll, wird dieser Auslösebereich derart vergrößert, dass dieser auf jeden Fall größer ist als die theoretisch größtmöglichste Kollisionswahrscheinlichkeit. Auf diese Weise ist es realisierbar, dass eine Vermeidung einer Auslösung mittels eines variablen Schwellenwertes darstellbar ist. Im weiteren Verlauf findet in Block 4 ein Vergleich statt, der ermittelt, ob die in Block 2 ermittelten Werte, die die Kollisionswahrscheinlichkeit repräsentieren, innerhalb des in Block 3 ermittelten aktuellen Auslösebereichs liegt. Ist diese Bedingung in Block 4 erfüllt, so verzweigt das Ablaufdiagramm weiter zu Block 5, da in diesen Fällen eine Vollbremsung eingeleitet werden soll. In Block 5 werden dementsprechend die Verzögerungsmittel des Fahrzeugs aktiviert, indem diese das Fahrzeug mit einer maximal möglichen Fahrzeugverzögerung abbremsen. Nach dieser Aktivierung in Block 5 erreicht das Ablaufdiagramm den Punkt A und springt zurück an den Anfang, woraufhin der Zyklus von Neuem durchlaufen wird. In dem Fall, dass die Abfrage in Block 4 ergibt, dass die die Kollisionswahrscheinlichkeit repräsentierende Größe kleiner oder gleich der in Block 3 ermittelten aktuellen Auslöseschwelle ist, verzweigt das Ablaufdiagramm zu Schritt 6. In Block 6 findet eine Deaktivierung der Verzögerungsmittel statt, indem die Bremsanlage des Fahrzeugs drucklos gemacht wird oder bei vorheriger Deaktivierung drucklos bleibt. In diesem Fall bewegt sich das Fahrzeug in einem als normal zu definierenden Zustand weiter, ohne eine Not- oder Vollbremsung vorzunehmen. Eine vom Fahrer im regulären Fahrbetrieb vorgenommene Fahrzeugverzögerung bleibt von dieser, in Schritt 6 dargestellten Deaktivierung, unbeeinflusst. Im Weiteren erreicht das Ablaufdiagramm wieder einen Punkt A, woraufhin der Ablauf an den Anfang zurückspringt und den Zyklus wiederholt.

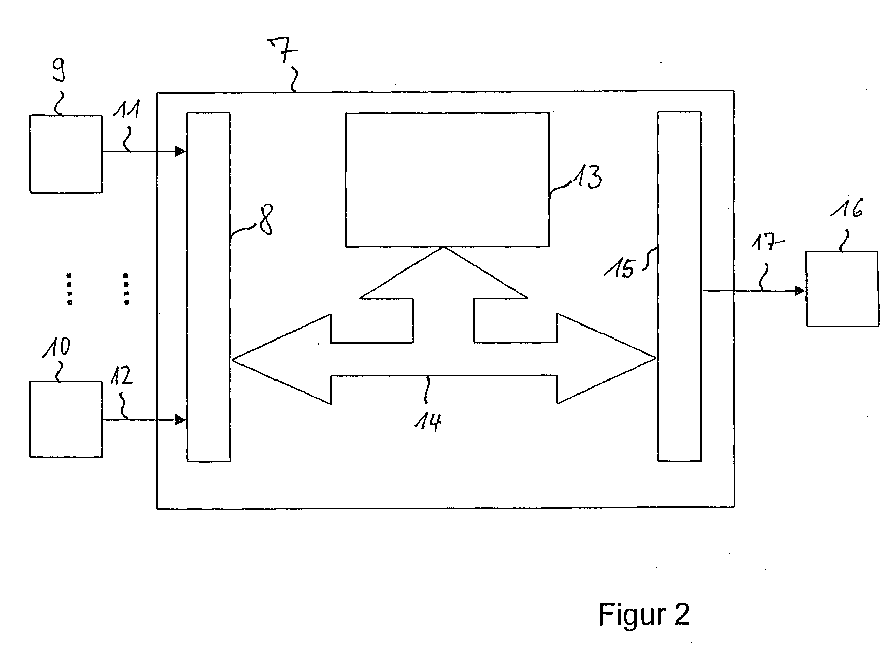

Figur 2 zeigt ein Blockdiagramm einer Vorrichtung, die zur Durchführung des in Figur 1 beschriebenen Verfahrens geeignet ist. Es ist eine Vorrichtung 7 dargestellt, die vorteilhafterweise als elektronisches Steuergerät realisiert ist, die unter anderem über ein Eingangsfeld 8 verfügt. Diesem Eingangsfeld 8 werden Signale 11 bis 12 zugeführt, die die Eingangsgrößen repräsentieren. Diese Eingangsgrößen stammen von Vorrichtungen 9 bis 10. Diese Vorrichtungen 9 bis 10, die der Vorrichtung 7 Eingangssignale zur Verfügung stellen, können ein Lenkwinkelsensor, ein Bremspedalsensor, ein Fahrpedalsensor, eine Einrichtung zur Ermittlung der Fahrzeuggeschwindigkeit, eine Einrichtung zur Ermittlung der Fahrbahnsteigung bzw. des Fahrbahngefälles, eine Einrichtung zur Ermittlung der Fahrzeuggierrate, eine Einrichtung zur Ermittlung des Fahrzeugschwimmwinkels oder eine Einrichtung zur Erfassung von stehenden und bewegten Objekten im Umfeld des Fahrzeugs, insbesondere in Form eines Radar- , Lidar- oder Videosystems sein. Die von diesen Vorrichtungen 9 bis 10 zur Verfügung gestellten Signale 11 bis 12 werden der Vorrichtung 7 mittels des Eingangsgrößenfeldes 8 zugeführt. Im Weiteren werden die Eingangsgrößen 11 bis 12 von dem Eingangsgrößenfeld mittels eines Datenaustauschsystems 14 einer Auswerteeinrichtung 13 zugeführt. Bei dieser Auswerteeinrichtung 13 handelt es sich vorteilhafterweise um einen Mikroprozessor, der das erfindungsgemäße Verfahren durchführt. Dieser Mikroprozessor 13 stellt eine Ausgangsgröße 17 zur Verfügung, die eine Aktivierung bzw. Deaktivierung der Verzögerungsmittel des Fahrzeugs veranlassen kann. Diese Ausgangsgröße wird vom Mikroprozessor 13 mittels eines Datenaustauschsystems 14 einem Ausgangsfeld 15 zugeführt. Dieses Ausgangsfeld 15 steuert eine Vorrichtung 16 an, die die Verzögerungsmittel des Fahrzeugs direkt beeinflussen kann. Weiterhin ist auch denkbar, dass der Mikroprozessor 13 mehrere Ausgangssignale 17 zur Verfügung stellen kann, die vom Ausgangsfeld 15 an die Steuereinrichtung zur Steuerung der Verzögerungsmittel 16 ausgegeben werden. So ist es denkbar, dass das Ausgangssignal 17, das vom Ausgangsfeld 15 ausgegeben wird, bei einer Erhöhung des Gefahrenpotentials aber bei noch nicht erreichter Auslöseschwelle die Verzögerungsmittel für eine bevorstehende Not- oder Vollbremsung vorbereiten kann. Dies geschieht üblicherweise durch ein Vorbefüllen der Bremsanlage und ein Anlegen der Bremsbeläge an die Bremsscheibe. Hierdurch kann im Auslösemoment eine wesentlich schnellere Verzögerungswirkung erreicht werden.

## Patentansprüche

1. Verfahren zum selbsttätigen Auslösen einer Verzögerung eines Fahrzeugs zur Verhinderung eines Zusammenstoßes oder zur Verminderung der Folgen eines bevorstehenden Zusammenstoßes, indem eine oder mehrere Größen, die eine Kollisionsgefährdung mit einem weiteren Objekt repräsentieren, in einem vorgebbaren Auslösebereich liegen müssen, **dadurch gekennzeichnet, dass** der Auslösebereich in Abhängigkeit von der Fahrerreaktion veränderbar ist, wobei die Veränderung des Auslösebereichs in Abhängigkeit der Fahrerreaktion mittels Signalen eines Lenkwinkelsensors, eines Bremspedalsensors und/oder eines Fahrpedalsensors erfolgt.

2. Verfahren nach Anspruch 1, **dadurch gekennzeichnet, dass** wenn die Lenkwinkelgeschwindigkeit einen ersten Lenkwinkelgeschwindigkeitsschwellenwert überschreitet, der Schwellenwert zur selbsttätigen Auslösung einer Fahrzeugverzögerung erhöht wird, wodurch die Auslösung erst bei einem höheren Kollisionsrisiko aktiviert wird.

3. Verfahren nach Anspruch 1, **dadurch gekennzeichnet, dass** wenn die Lenkwinkelgeschwindigkeit einen zweiten Lenkwinkelgeschwindigkeitsschwellenwert überschreitet, der größer ist als der erste Lenkwinkelgeschwindigkeitsschwellenwert, die selbsttätige Auslösung einer Fahrzeugverzögerung unterbunden wird.

4. Verfahren nach Anspruch 1, **dadurch gekennzeichnet, dass** wenn die Lenkwinkelgeschwindigkeit während einer bereits ausgelösten selbsttätigen Fahrzeugverzögerung einen dritten Lenkwinkelgeschwindigkeitsschwellenwert überschreitet, die selbsttätig ausgelöste Verzögerung beendet wird.

5. Verfahren nach Anspruch 1, **dadurch gekennzeichnet, dass** wenn der Bremsdruck infolge einer Betätigung des Bremspedals durch den Fahrer in etwa dem maximal möglichen Bremsdruck entspricht, eine selbsttätige Auslösung einer Verzögerung verhindert wird.

6. Verfahren nach Anspruch 1, **dadurch gekennzeichnet, dass** wenn der Fahrer das Bremspedal betätigt und während der Bremspedalbetätigung des Fahrers eine selbsttätige Fahrzeugverzögerung ausgelöst wird und der Fahrer im weiteren Verlauf das Bremspedal losläßt, die selbsttätig ausgelöste Verzögerung abgebrochen wird.

7. Verfahren nach Anspruch 1, **dadurch gekennzeichnet, dass** wenn der Fahrer das Fahrpedal derart schnell betätigt, dass ein erster Fahrpedalgeschwindigkeitsschwellenwert überschritten wird, die Auslöseschwelle zur selbsttätigen Auslösung einer Fahrzeugverzögerung erhöht wird und damit die Auslösung verzögert wird.

8. Verfahren nach Anspruch 1, **dadurch gekennzeichnet, dass** wenn der Fahrer das Fahrpedal derart schnell betätigt, dass ein zweiter Fahrpedalgeschwindigkeitsschwellenwert überschritten wird, der größer ist als der erste Fahrpedalgeschwindigkeitsschwellenwert, die selbsttätige Auslösung einer Fahrzeugverzögerung verhindert wird.

9. Verfahren nach Anspruch 1, **dadurch gekennzeichnet, dass** wenn während einer selbsttätig ausgelösten Fahrzeugverzögerung der Fahrer das Fahrpedal derart schnell betätigt, dass ein dritter Fahrpedalgeschwindigkeitsschwellenwert überschritten wird, die selbsttätig ausgelöste Verzögerung abgebrochen wird.

10. Verfahren nach Anspruch 1, **dadurch gekennzeichnet, dass** wenn der Fahrer das Fahrpedal derart schnell losläßt, dass ein vierter Fahrpedalgeschwindigkeitsschwellenwert betragsmäßig überschritten wird, der Schwellenwert zur selbsttätigen Auslösung einer Fahrzeugverzögerung verringert wird.

11. Verfahren nach Anspruch 1, **dadurch gekennzeichnet, dass** wenn der Fahrer das Bremspedal derart betätigt, dass eine Fahrzeugverzögerung eintritt, die nicht der maximal möglichen Verzögerung entspricht, und eine Lenkwinkelveränderung erfolgt, deren Lenkwinkelgeschwindigkeit einen vorgegebenen Lenkwinkelgeschwindigkeitsschwellenwert betragsmäßig nicht überschreitet, der Schwellenwert zur selbsttätigen Auslösung einer Fahrzeugverzögerung verringert wird.

12. Verfahren nach einem der vorhergehenden Ansprüche, **dadurch gekennzeichnet, dass** wenn im weiteren Verlauf nach einer selbsttätigen Auslösung einer Fahrzeugverzögerung erkannt wird, dass die Auslösekriterien nicht mehr erfüllt sind, die selbsttätig ausgelöste Fahrzeugverzögerung beendet wird.

13. Vorrichtung zum selbsttätigen Auslösen einer Verzögerung eines Fahrzeugs zur Verhinderung eines Zusammenstoßes oder zur Verminderung der Folgen eines bevorstehenden Zusammenstoßes, indem eine oder mehrere Größen, die eine Kollisionsgefährdung mit einem weiteren Objekt repräsentieren, in einem vorgebbaren Auslösebereich liegen müssen, **dadurch gekennzeichnet, dass** dieser Vorrichtung Signale eines Lenkwinkelsensors, eines Bremspedalsensors, und/oder eines Fahrpedalsensors, zugeführt werden und die Vorrichtung in Abhängigkeit dieser Eingangsgrößen ein Signal ausgibt, das die Verzögerungsmittel des Fahrzeugs steuert, wobei der Auslösebereich in Abhängigkeit von der Fahrerreaktion, die anhand der zugeführten Signale ermittelt wird, veränderbar ist.

## Claims

1. Method for automatically triggering deceleration of a vehicle in order to prevent a collision or in order to reduce the consequences of an imminent collision, by virtue of the fact that one or more variables which represent a risk of collision with another object have to lie within a predefinable triggering range, **characterized in that** the triggering range can be changed as a function of the driver's reaction, wherein the change in the triggering range takes places as a function of the driver's reaction by means of signals from a steering angle sensor, a brake pedal sensor and/or an accelerator pedal sensor.

2. Method according to Claim 1, **characterized in that** if the steering angle speed exceeds a first steering angle speed threshold value, the threshold value is increased in order to automatically trigger deceleration of the vehicle, as a result of which the triggering is not activated until there is a relatively high risk of a collision.

3. Method according to Claim 1, **characterized in that** if the steering angle speed exceeds a second steering angle speed threshold value which is greater than the first steering angle speed threshold value, the automatic triggering of deceleration of the vehicle is suppressed.

4. Method according to Claim 1, **characterized in that** if the steering angle speed exceeds a third steering angle speed threshold value during automatic deceleration of the vehicle which has already been triggered, the deceleration which is triggered automatically is ended.

5. Method according to Claim 1, **characterized in that** if the brake pressure due to the activation of the brake pedal by the driver corresponds approximately to the maximum possible brake pressure, automatic triggering of deceleration is prevented.

6. Method according to Claim 1, **characterized in that** if the driver activates the brake pedal and automatic deceleration of the vehicle is triggered during the activation of the brake pedal by the driver and the driver releases the brake pedal later, the automatically triggered deceleration is aborted.

7. Method according to Claim 1, **characterized in that** if the driver activates the accelerator pedal so quickly that a first accelerator pedal speed threshold value is exceeded, the triggering threshold for automatic triggering of deceleration of the vehicle is increased, and the triggering is therefore delayed.

8. Method according to Claim 1, **characterized in that** if the driver activates the accelerator pedal so quickly that a second accelerator pedal speed threshold value which is higher than the first accelerator pedal speed threshold value is exceeded, the automatic triggering of deceleration of the vehicle is prevented.

9. Method according to Claim 1, **characterized in that** if, during automatically triggered deceleration of the vehicle, the driver activates the accelerator pedal so quickly that a third accelerator pedal speed threshold value is exceeded, the automatically triggered deceleration is aborted.

10. Method according to Claim 1, **characterized in that** if the driver releases the accelerator pedal so quickly that a fourth accelerator pedal speed threshold value is exceeded in terms of absolute value, the threshold value for automatic triggering of deceleration of the vehicle is reduced.

11. Method according to Claim 1, **characterized in that** if the driver activates the brake pedal in such a way that deceleration of the vehicle occurs which does not correspond to the maximum possible deceleration, and a change in the steering angle occurs and the steering angle speed of said change does not exceed a predefined steering angle speed threshold value in absolute terms, the threshold value for automatic triggering of deceleration of the vehicle is reduced.

12. Method according to one of the preceding claims, **characterized in that** if it is detected later, after automatic triggering of deceleration of the vehicle, that the triggering criteria are no longer met, the automatically triggered deceleration of the vehicle is ended.

13. Device for automatically triggering deceleration of a vehicle in order to prevent a collision or in order to reduce the consequences of an imminent collision, by virtue of the fact that one or more variables which represent a risk of collision with another object have to lie within a predefinable triggering range, **characterized in that** this device is supplied with signals from a steering angle sensor, a brake pedal sensor and/or an accelerator pedal sensor, and as a function of these input variables the device outputs a signal which controls the deceleration means of the vehicle, wherein the triggering range can be changed as a function of the driver's reaction which is determined by means of the supplied signals.

## Revendications

1. Procédé de déclenchement automatique de la décélération d'un véhicule pour éviter une collision ou pour réduire les conséquences d'une collision éminente, si une ou plusieurs grandeurs représentant un risque de collision avec un autre objet se situe dans une plage de déclenchement prédéfinie,
**caractérisé en ce que**
la plage de déclenchement est variable selon la réaction du conducteur et la variation de la plage de déclenchement est faite en fonction de la réaction du conducteur à l'aide des signaux d'un capteur d'angle de braquage, un capteur de pédale de frein et/ou d'un capteur de pédale d'accélérateur.

2. Procédé selon la revendication 1,
**caractérisé en ce que**
si la vitesse de l'angle de braquage dépasse un premier seuil de vitesse d'angle de braquage, on augmente le seuil de déclenchement automatique de décélération du véhicule pour activer le déclenchement seulement pour un risque de collision plus élevé.

3. Procédé selon la revendication 1,
**caractérisé en ce que**
si la vitesse de l'angle de braquage dépasse un second seuil de vitesse d'angle de braquage supérieur au premier seuil de vitesse d'angle de braquage, on neutralise le déclenchement automatique de la décélération du véhicule.

4. Procédé selon la revendication 1,
**caractérisé en ce que**
si au cours d'une décélération automatique du véhicule, déjà déclenchée, la vitesse de l'angle de braquage dépasse un troisième seuil de vitesse d'angle de braquage, on arrête la décélération déclenchée automatiquement.

5. Procédé selon la revendication 1,
**caractérisé en ce que**
si par suite de l'actionnement de la pédale de frein par le conducteur, la pression de frein correspond sensiblement à la pression de frein maximum possible, on bloque le déclenchement automatique de la décélération.

6. Procédé selon la revendication 1,
**caractérisé en ce que**
si le conducteur actionne la pédale de frein et si pendant l'actionnement de la pédale de frein par le conducteur, une décélération automatique du véhicule est déclenchée et si le conducteur relâche ensuite la pédale de frein, on arrête la décélération déclenchée automatiquement.

7. Procédé selon la revendication 1,
**caractérisé en ce que**
si le conducteur actionne la pédale d'accélérateur suffisamment rapidement pour dépasser un premier seuil de vitesse d'actionnement de pédale d'accélérateur, on augmente le seuil de déclenchement automatique de la décélération du véhicule et on retarde son déclenchement.

8. Procédé selon la revendication 1,
**caractérisé en ce que**
si le conducteur actionne la pédale d'accélérateur tellement rapidement que l'on dépasse un second seuil de vitesse d'actionnement de la pédale d'accélérateur, supérieur au premier seuil de vitesse d'actionnement de la pédale d'accélérateur, on neutralise le déclenchement automatique d'une décélération du véhicule.

9. Procédé selon la revendication 1,
**caractérisé en ce que**
si pendant une décélération du véhicule, déclenchée automatiquement, le conducteur actionne la pédale d'accélérateur tellement rapidement que l'on dépasse un troisième seuil de vitesse d'actionnement de pédale d'accélérateur, on interrompt la décélération déclenchée automatiquement.

10. Procédé selon la revendication 1,
**caractérisé en ce que**
si le conducteur libère la pédale d'accélérateur tellement rapidement que l'on dépasse en amplitude, un quatrième seuil de vitesse d'actionnement de la pédale d'accélérateur, on diminue le seuil de déclenchement automatique de décélération du véhicule sera diminué.

11. Procédé selon la revendication 1,
**caractérisé en ce que**
si le conducteur actionne la pédale de frein pour produire une décélération du véhicule qui ne correspond pas à la décélération maximale possible et s'il y a une variation de l'angle de braquage dont la vitesse d'angle de braquage ne dépasse pas en amplitude, un seuil de vitesse d'angle de braquage, on diminue le seuil de déclenchement automatique de la décélération du véhicule.

12. Procédé selon l'une des revendications précédentes,
**caractérisé en ce que**
si au cours de la suite, après un déclenchement automatique de décélération du véhicule on constate que les critères de déclenchement, ne sont plus remplis, on termine la décélération du véhicule, déclenchée automatiquement.

13. Dispositif de déclenchement automatique de la décélération d'un véhicule pour éviter une collision ou pour réduire les conséquences d'une collision imminente, si une ou plusieurs grandeurs représentant le risque de collision avec un autre objet se situent dans une plage de déclenchement prédéfinie,
**caractérisé en ce que**
ce dispositif reçoit des signaux d'un capteur d'angle de braquage, d'un capteur de pédale de frein et/ou d'un capteur de pédale d'accélérateur et, en fonction de ces grandeurs d'entrée, le dispositif émet un signal commandant les moyens de décélération du véhicule, la plage de déclenchement étant modifiée en fonction de la réaction du conducteur définie à l'aide des signaux reçus.
